Europäisches Patentamt

European Patent Office

Office européen des brevets

(19)

(11) Veröffentlichungsnummer: **0 024 641**
B1

(12) EUROPÄISCHE PATENTSCHRIFT

(45) Veröffentlichungstag der Patentschrift:
18.05.83

(51) Int. Cl.³: **B 41 J 3/20**, G 01 D 15/08

(21) Anmeldenummer: **80104810.9**

(22) Anmeldetag: **14.08.80**

(54) **Anordnung für bei Metallpapierdruckern nachzuführenden Elektroden.**

(30) Priorität: **04.09.79 DE 2935595**

(43) Veröffentlichungstag der Anmeldung:
**11.03.81 Patentblatt 81/10**

(45) Bekanntmachung des Hinweises auf die Patenterteilung:
**18.05.83 Patentblatt 83/20**

(84) Benannte Vertragsstaaten:
**DE FR GB IT**

(56) Entgegenhaltungen:

**DE-A-1 448 770**
**DE-A-2 653 033**
**FR-A-1 403 063**
**FR-A-2 285 248**

**IBM TECHNICAL DISCLOSURE BULLETIN, Band 22, Nr. 11, April 1980, Seite 4969, Armonk US D.J. BAHR: «Elelctrode guide for metal paper printers»**

(73) Patentinhaber: **International Business Machines Corporation, Armonk, N.Y. 10504 (US)**

(72) Erfinder: **Hartmann, Kurt, Breite Heerstrasse 33, D-7260 Calw-Heumaden (DE)**

(74) Vertreter: **Blutke, Klaus, Dipl.-Ing., Schönaicher Strasse 220, D-7030 Böblingen (DE)**

Anordnung für bei Metallpapierdruckern nachzuführenden Elektroden

Die Erfindung betrifft eine Anordnung für bei Metallpapierdruckern nachzuführenden Elektroden. Die Elektroden bei Metallpapierdruckern sind einem Abrieb ausgesetzt. Dieser Abrieb äussert sich besonders stark bei Druckern hoher Druckauflösung, d.h., bei sehr dünnen Elektroden. Aus diesem Grunde müssen die Elektroden nachführbar sein.

Aus der deutschen DE-A-2 758 150 ist eine Anordnung zum Nachführen von Elektroden für Vielfachelektroden-Schreibköpfe von Metallpapierdruckern beschrieben, die dadurch gekennzeichnet ist, dass eine in einem Gehäuse laufende Hohltrommel vorgesehen ist, dass die Gehäusebohrung zur Aufnahme der Trommel oder Trommel-Umfang mit parallel verlaufenden Rillen zur Aufnahme der Elektroden versehen ist, dass die Elektroden durch Bohrungen durch das Innere der Trommel geführt und mit einem Kontaktstecker verbunden sind, dass die in den Rillen der Gehäusebohrung oder der Trommel verlaufenden Elektroden diese tangential verlassen und den Elektrodenführungen des Schreibkopfes zuführbar sind und dass ein Antrieb für eine schrittweise Trommeldrehung vorgesehen ist.

Diese Anordnung ist konstruktiv sehr aufwendig. Sie nimmt nicht nur relativ viel Raum ein, sondern ist auch mit einem relativ hohen Gewicht behaftet, was sich für Geschwindigkeitssteuerungen des Schreibkopfes nachteilig auswirkt.

Es ist deshalb Aufgabe der Erfindung, eine Anordnung für bei Metallpapierdruckern nachzuführenden Elektroden vorzugeben, welche konstruktiv einfach ist, wenig Platz einnimmt und mit wenig Gewicht behaftet ist.

Diese Aufgabe der Erfindung wird in vorteilhafter Weise durch die im kennzeichnenden Teil des Anspruches 1 angegebenen Massnahmen gelöst.

Weitere vorteilhafte Ausgestaltungen der Erfindung sind den Unteransprüchen zu entnehmen.

Ein Ausführungsbeispiel der Erfindung ist in den Zeichnungen dargestellt und wird im folgenden näher beschrieben. Es zeigen:

Fig. 1 eine schematische Darstellung eines biegsamen dünnen Schlauches mit zwei durch Berührung ihrer Längsseiten kontaktierenden Elektrodendrähten,

Fig. 2 eine schematische Darstellung eines Bündels elektrodenführender Schläuche mit einer dieses Bündel ordnenden Führungsvorrichtung,

Fig. 3 eine schematische Schnittdarstellung der Führungsvorrichtung gemäss Fig. 2 entlang der Schnittlinie X-X.

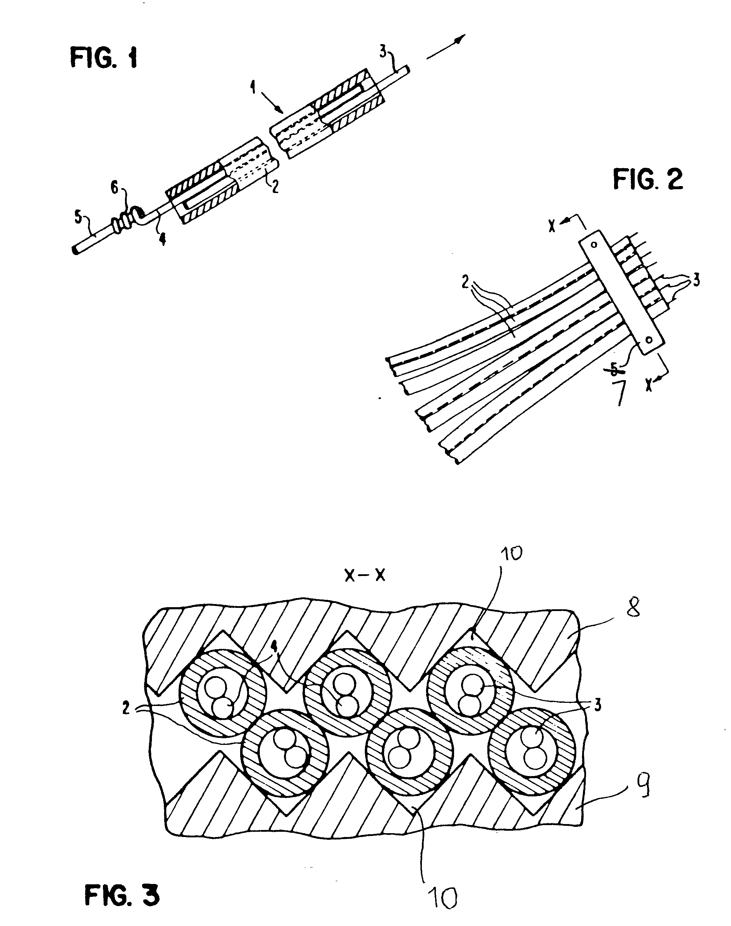

In Fig. 1 ist schematisch eine Anordnung 1 zur elektrischen Kontaktgabe mit einem dünnen biegsamen Schlauch 2 aus nichtleitendem Material gezeigt. Vorzugsweise besteht dieser Schlauch aus Plastik. In diesem Schlauch 2 sind zwei Elektrodendrähte 4 und 3 angeordnet. Der Elektrodendraht 4 ist mit seinem aus dem Schlauch 2 herausragenden Ende fest mit einer Spannungsführung 5 verbunden. Eine solche Verbindung kann z.B. durch eine sog. «Wire-Wrapp»-Verbindung (Drahtwickel) 6 erfolgen. Zur Vermeidung eines «Aufspringens» dieser Verbindung kann diese mit einem Plastikschrumpfschlauch (nicht gezeichnet) umgeben werden. Der Elektrodendraht 3 im Schlauch 2 ist in Pfeilrichtung bewegbar. Die Durchmesser der für Metallpapierdrucker hohen Auflösungsvermögens verwendeten Elektrodendrähte liegt in der Grössenordnung von 80 u. Dieser geringe Durchmesser macht die Elektrodendrähte relativ biegsam. Der Innendurchmesser des Schlauches 2 ist so bemessen, um die zwei Elektrodendrähte (4 und 3) aufzunehmen, wobei durch deren gegenseitiger Berührung an den Längsseiten ein ausreichender elektrischer Kontakt gewährleistet sein muss. Darüber hinaus ist der Schlauchdurchmesser so auf die beiden Elektrodendrähte abzustimmen, dass eine leichte Verschiebbarkeit des beweglich angeordneten Elektrodendrahtes 3 gegenüber dem Elektrodendraht 4 gewährleistet ist. Diese Verschiebbarkeit bei guter elektrischer gegenseitiger Kontaktgabe soll auch bei elastischen Verbiegungen des Elektrodenschlauches 2 gewährleistet sein. Zum Nachführen des Elektrodendrahtes 3 zum Ausgleich des beim Schreibvorgang auftretenden Abriebs wird dieser mit Hilfe einer nicht dargestellten Vorrichtung, z.B. mit Hilfe von Transportwalzen, aus dem Schlauch 2 herausgezogen. Die Gesamtlänge des Elektrodendrahtes 3 ist so zu wählen, dass bei einem vorgegebenen Abrieb ein Ersatz des verbrauchten Elektrodendrahtes 3 nur in grossen Zeiträumen vorgenommen werden muss.

Versuche haben ergeben, dass bei genügender Länge des Elektroschlauches bzw. des Verbrauchs-Elektrodendrahtes 3 ein Ersetzen dieser Elektrode gar nicht mehr zur Diskussion steht, da deren Lebensdauer die übliche Einsatzdauer des gesamten Druckers ohnehin übersteigt. (Abgesehen davon würde ein erneutes Einsetzen einer neuen Elektrode 3 ohnehin problemlos sein.)

In Fig. 2 ist eine Führungsvorrichtung 7 für ein Bündel elektrodendrahtführender Schläuche dargestellt. Diese Vorrichtung 7 besteht aus zwei Hälften: einem Unterteil 9 und einem Oberteil 8. Im Ober- und Unterteil sind nebeneinanderliegende parallele Rillen 10 zur Aufnahme eines Teilstückes der Elektrodenschläuche 2 vorgesehen. In der Ausführungsform nach Fig. 3 zeigen diese Rillen einen dreiecksförmigen Querschnitt. Die Rillen des Oberteils 8 sind gegenüber denen des Unterteils 9 um eine halbe Rillenbreite versetzt. Die Rillentiefe ist geringer als der Schlauchdurchmesser, so dass bei einem entsprechenden Abstand zwischen dem Ober- und Unterteil die Elektroden-Schläuche des Unterteils teilweise zwischen den Schläuchen des Oberteils liegen. Durch diese Anordnung ist gewährleistet, dass die aus den einzelnen Schläuchen 2 heraustretenden Elektroden 3 einen möglichst kleinen Abstand voneinander haben und annäherungsweise in einer Ebene zu liegen kommen. Dies ist wichtig, wenn die Elektroden 3 einer nicht dargestellten Transportwalzen-Anordnung (zum Vorschieben der Elektroden) zugeführt werden. Bei einer solchen Vorschubanordnung ergibt sich aus konstruktiven Gründen oft zwangsweise eine Positionierung der Elektroden in einer Ebene. Auf diese Weise nimmt das Führungsstück 7 neben der Fixierung der einzelnen Elektrodenschläuche auch die Funktion einer Lagetransformation für die Schläuche ein. Dies ist für Metallpapierdrucker hohen Auflösungsvermögens erforderlich, um eine möglichst dichte Packung der Elektroden zu erreichen und diese dabei möglichst angenähert in einer Ebene auszurichten. Das Ausrichten wird dadurch unterstützt, dass sich die Austrittstelle der Elektroden 3 aus den einzelnen Elektrodenschläuchen 2 von selbst an einer Position bildet, welche einer durchgehenden Horizontalen nahekommt.

## Patentansprüche

1. Anordnung zur elektrischen Kontaktgabe eines einem Abrieb unterworfenen und deshalb nachzuführenden Elektrodendrahtes, dadurch gekennzeichnet, dass ein schlauchartiger Isolierkörper (2) vorgesehen ist zur Aufnahme zweier sich an ihren Längsseiten berührender Elektrodendrähte (4, 3), von denen der eine (4) mit einer elektrischen Spannungsquelle verbunden ist und der andere (3) aus dem Isolierkörper (2) herausziehbar angeordnet ist.

2. Anordnung nach Anspruch 1, dadurch gekennzeichnet, dass der schlauchartige Isolierkörper (2) und die Elektrodendrähte (3, 4) biegeelastisch sind.

3. Anordnung zur Fixierung eines Bündels von Elektrodendrahtschläuchen gemäss Anspruch 1 bis 2, gekennzeichnet durch ein Ober- (8) und Unterteil (9), in welchem Rillen (10) zur Aufnahme der Elektrodendrahtschläuche (2) angeordnet sind und bei dem die Rillen (10) des Oberteils (8) gegenüber denen des Unterteils (9) um eine halbe Rillenbreite versetzt sind. (Fig. 3)

4. Anordnung nach Anspruch 3, dadurch gekennzeichnet, dass die Rillentiefe geringer als der Elektrodenschlauchdurchmesser ist und dass die Elektrodenschläuche (2) des Unterteils (9) teilweise zwischen den Elektrodenschläuchen des Oberteils (8) verlaufen.

## Revendications

1. Dispositif pour l'établissement de contact électrique d'un fil d'électrode soumis à usure et, de ce fait, à devant pouvoir être avancé, caractérisé par le fait qu'il est prévu un corps isolant (2) en forme de gaine souple pour loger deux fils d'électrode (4, 3) s'effleurant sur leurs faces longitudinales, dont l'un (4) est relié à une source de tension électrique et l'autre (3) est disposé de manière à pouvoir être extrait du corps isolant (2).

2. Dispositif selon la revendication 1, caractérisé par le fait que le corps isolant en forme de gaine souple (2) et les fils d'électrode (3, 4) sont flexibles.

3. Dispositif pour la fixation d'un faisceau de gaines porte-électrodes selon l'une quelconque des revendications 1 à 2, caractérisé par une partie supérieure (8) et inférieure (9) dans lesquelles sont pratiquées des rainures (10) destinées à loger les gaines porte-électrodes (2) et dans lesquelles les rainures (10) de la partie supérieure (8) sont décalées d'une demi-largeur de rainure par rapport à celles de la partie inférieure (9) (figure 3).

4. Dispositif selon la revendication 3, caractérisé par le fait que la profondeur de rainure est inférieure au diamètre de la gaine porte-électrodes et que les gaines porte-électrodes (2) de la partie inférieure (9) sont situées, en partie, entre les gaines porte-électrodes de la partie supérieure (8).

## Claims

1. An arrangement for electrically contacting an electrode wire which is subject to wear and thus has to be advanced, characterized in that a tube-like insulator (2) is provided for accommodating two electrode wires (4, 3) contacting each other along their length, one of which (4) is connected to an electrical voltage source and the other of which (3) is arranged such that it can be pulled from the insulator (2).

2. An arrangement according to claim 1, characterized in that the tubelike insulator (2) and the electrode wires (3, 4) are flexible.

3. An arrangement for holding a bundle of electrode wires according to claims 1 to 2, characterized by an upper part (8) and a lower part (9) with grooves (10) for accommodating the electrode wire tubes (2), the grooves (10) of the upper part (8) being offset by half a groove width relative to those of the bottom part (9) (Fig. 3).

4. An arrangement according to claim 3, characterized in that the groove depth is less than the diameter of the electrode tubes, and that the electrode tubes (2) of the bottom part (9) extend for part of their length between the electrode tubes of the upper part (8).

FIG. 1

FIG. 2

FIG. 3

X - X